(19) Europäisches Patentamt
European Patent Office
Office européen des brevets

(11) Veröffentlichungsnummer: **0 243 876**
**A2**

(12) # EUROPÄISCHE PATENTANMELDUNG

(21) Anmeldenummer: 87105945.7

(22) Anmeldetag: 23.04.87

(51) Int.Cl.³: B 01 D 13/04

(30) Priorität: 30.04.86 DE 3614755

(43) Veröffentlichungstag der Anmeldung: 04.11.87 Patentblatt 87/45

(84) Benannte Vertragsstaaten: BE CH DE FR GB IT LI NL

(71) Anmelder: BAYER AG
Konzernverwaltung RP Patentabteilung
D-5090 Leverkusen 1 Bayerwerk(DE)

(72) Erfinder: Fischer, Wolfgang, Dr.
Breslauer Strasse 15
D-4005 Meerbusch 3(DE)

(54) **Herstellung von semipermeablen Composite-Membranen.**

(57) Verfahren zur Herstellung semipermeabler Verbundmembranen aus wenigstens einem porösen Träger und wenigstens einer auf dem porösen Träger ausgebildeten semipermeablen Schicht, dadurch gekennzeichnet, daß an der Oberfläche des porösen Trägers ein wenigstens bifunktionelles Amin mit primären oder sekundären Aminogruppen und ein wenigstens bifunktionelles, bisulfitverkapptes Isocyanat zur Reaktion gebracht wird, wobei das Amin und das verkappte Isocyanat getrennt in gelöster Form auf den porösen Träger aufgebracht werden und als Lösungsmittel für das Amin und das verkappte Isocyanat Wasser bzw. wäßrige Mischungen verwendet werden, wobei die Lösungsmittel für das Amin bzw. das verkappte Isocyanat miteinander mischbar sein müssen, sowie die so erhaltenen Membranen und ihre Verwendung in Druckfiltration und Umkehrosmose.

EP 0 243 876 A2

Croydon Printing Company Ltd

BAYER AKTIENGESELLSCHAFT 5090 Leverkusen, Bayerwerk
Konzernverwaltung RP 29. 4. 86
Patentabteilung G/Kü-c

Herstellung von semipermeablen Composite-Membranen

Die Erfindung betrifft die Herstellung semipermeabler Membranen und deren Verwendung bei Druckfiltration und Umkehrosmose von wasserhaltigen Mischungen oder Lösungen z.B. zur Meerwasserentsalzung.

Druckfiltrationen, z.B. Umkehrosmose und Ultrafiltration, sind Verfahren zur Stofftrennung. Bei diesen Trennprozessen wird die zu trennende Lösung unter Druck über die Oberfläche einer semipermeablen Membran geleitet, wobei das Lösungsmittel und evtl. ein Teil der gelösten Stoffe durch die Membran dringen, während die übrigen Komponenten der Lösung an der Oberfläche der Membran zurückgehalten und in der Lösung angereichert werden.

Trennungen gelöster Substanzen vom Lösungsmittel durch Druckfiltration, z.B. die Abtrennung von Salzen aus Meer- und Brackwasser zur Gewinnung von Süßwasser oder die Abtrennung bestimmter Inhaltsstoffe aus Prozeßwässern und Produktionsabläufen oder die Entfernung unerwünschter Stoffe aus Abwässern, sind Verfahren, die zunehmend an Bedeutung gewinnen.

Eine technische Bedeutung für diese Verfahren haben bisher hauptsächlich Membranen aus Celluloseestern, insbesondere Celluloseacetat, bzw. aus Polyamiden und Polysulfonen erlangt. Celluloseacetat-Membranen finden wegen ihrer guten Durchflußleistung und ihres hohen Trennvermögens technische Anwendung, obwohl sie eine Reihe nachteiliger Eigenschaften aufweisen, die ihre allgemeine Verwendbarkeit einschränken. Es sind dies eimal mangelnde Chemikalienbeständigkeit, insbesondere auch die Hydrolyseempfindlichkeit bei hohem oder niedrigem pH-Wert sowie die Anfälligkeit gegenüber einem Abbau durch Mikroorganismen. Dies führt im Laufe der Zeit zu einer Verschlechterung der Membraneigenschaften.

Ferner sind die Celluloseacetat-Membranen durch eine niedrige Wärmebeständigkeit in ihrer Verwendung eingeschränkt. Polyamidmembranen besitzen eine höhere Beständigkeit gegenüber Alkalien oder Säuren sowie Lösungsmitteln, weisen aber auch allgemein geringere Durchflußleistungen als Celluloseacetat-Membranen auf. Aus Polysulfonen lassen sich nur durchlässige Membranen herstellen, die nicht zur Abtrennung von Stoffen mit kleiner Teilchengröße bzw. mit niedrigem Molekulargewicht wie beispielsweise Salzen geeignet sind.

Im allgemeinen sind die vorstehend beschriebenen Membranen ihrer Struktur nach asymmetrische Membranen, bei denen - in der Regel durch Phaseninversionsmethoden - eine poröse Unterschicht und darauf aus demselben Material eine selektive Oberflächenschicht - die wirksame Trennschicht - erzeugt wird.

0243876

Nun lassen sich aber viele potentiell für Membranen geeignete Polymere nicht nach der Phaseniversionsmethode zu Membranen verarbeiten. Die Verwendung solcher Materialien als Membrantrennschichten gelingt durch Herstellung von sogenannten Composite- oder Verbundmembranen. Diese weisen einen anderen Aufbau auf: Auf einer stabilen, zumeist aus einer mikroposösen Membran bestehenden Unterlage wird eine sehr dünne Polymerschicht aus demselben oder einem anderen Material als selektive Trennschicht aufgebracht.

Zusammengesetzte Membranen werden z.B. erhalten, indem mikroporöse Stützmembranen mit Lösungen der Reaktionskomponenten, die die Trennschicht bilden sollen, in Kontakt gebracht werden.

Ein bekanntes Verfahren zur Herstellung zusammengesetzter Membranen ist die sogenannte Grenzflächenpolykondensation. Dazu wird z.B. ein dünner, vernetzbarer Prepolymerfilm auf der Stützmembran durch in Kontakt bringen der Stützmembran mit einer Lösung des Prepolymers erzeugt. Die Composite-Membran bzw. deren dünne, selektive Trennschicht wird dann durch Umsetzung des Prepolymerfilms mit einem geeigneten Vernetzungsmittel hergestellt. Dazu wird die mit der Lösung eines Prepolymeren überzogene Stützmembran mit einer Lösung des Vernetzungsmittels in einem nicht mischbaren Lösungsmittel in Kontakt gebracht, am einfachsten erfolgt dies durch Eintauchen in die Vernetzungsmittellösung.

Das für das Vernetzungsmittel verwendete Lösungsmittel darf weder das verwendete Prepolymer auflösen noch die Stützmembran schädigen oder auflösen. Zur Vollendung der Vernetzungsreaktion wird die Membran aus der Lösung genommen und eine gewisse Zeit bei Raumtemperatur, oder bei erhöhter Temperatur belassen. Die Grenzflächenpolykondensation wird zumeist so durchgeführt, daß eine wasserhaltige Stützmembran, z.B. eine Ultrafiltrationsmembran, mit einer wäßrigen Oligo- oder Polyaminlösung überzogen wird. Dies kann nach bekannten Verfahren, wie Streichen, Bürsten, Aufgießen und Sprühen, erfolgen, (wobei bei asymmetrischen Stützmembranen nur eine Seite der aktiven Trennschicht behandelt wird). In einfacher Weise wird die Beschichtung durch Eintauchen vorgenommen. Anschließend wird zur Herstellung der dünnen selektiven Trennschicht das auf der Stützmembran aufgezogene Amin mit einer Lösung des Vernetzungsmittels in einem nicht mischbaren Lösungsmittel behandelt, hier empfehlen sich Methoden wie Aufgießen, Sprühen, am besten aber wiederum Eintauchen. Vernetzungsmittel sind z.B. Oligoisocyanate oder Oligocarbonsäurechloride. Als Lösungsmittel sind aprotische, organische Lösungsmittel wie Hexan oder Heptan nötig. Die Kontaktzeit der 2 flüssigen Phasen liegt im Bereich von 5-300 s die darauffolgende Temperung erfolgt bei 60-120° C. Die so erhaltenen Polyharnstoff- oder Polyamid-Composite-Membranen zählen zu den bislang wirkungsvollsten in bezug auf Rückhalt und Durchfluß bei der Aufarbeitung wäßriger Lösungen durch Druckfiltration oder Umkehrosmose.

Da bei dem Verfahren der Grenzflächenpolykondensation die beiden die selektive Trennschicht bildenden Reaktionskomponenten in nicht miteinander mischbaren Lösungsmitteln gelöst sind, tritt eine Polykondensation nur an der Grenzfläche der beiden Lösungen auf und es entstehen extrem dünne Polymerfilme. Diese Filme müssen praktisch fehlstellenfrei sein, um als Trennschicht wirksam zu sein. Bei diesem Verfahren treten in der Praxis jedoch Schwierigkeiten auf:

Die als Vernetzungsmittel verwendeten Oligocarbonsäurechloride oder Oligocyanate können durch Kontakt mit der wäßrigen Phase vor der Reaktion mit Amin hydrolysieren, dies kann zu Löchern und Fehlstellen in der selektiven Trennschicht durch Adsorption der Hydrolysate und ungenügender Vernetzung führen.

J.E. Cadotte et al. (J. Macromol. Sci. Chem. A 15 (5) pp. 727-755 (1981)) beschrieben, daß Amine teilweise in die organische Phase diffundieren, was zur Bildung poröser Polymerschichten und damit zu schlechten Rückhaltewerten führt. Des weiteren ist vermerkt, daß die Methode sehr empfindlich von der Qualität der mikroporösen Trägerschicht abhängig ist.

An anderer Stelle (J.E. Cadotte, R.J. Petersen, Am. Chem. Soc. Symposium Series Vol. 153, Synthetic Membranes Vol. 1 Desalination S. 305-326 (1981)) wird beschrieben, daß die Produktion von Umkehrosmose-Membranen nach der Grenzflächenpolykondensation mit gewissen Aminen und Isocyanaten nur mit Schwierigkeiten möglich, teilweise sogar sogar nicht möglich war.

Bei der Grenzflächenpolykondensation zur Herstellung von Composite-Membranen treten an der Grenzfläche der beiden flüssigen Phasen mechanische Verwirbelungen d.h. teilweise Vermischung der Reaktionskomponenten auf, die zur Bildung poröser Stellen auf der selektiven Trennschicht führen können. Dies führt zu einer Verschlechterung der Rückhaltewerte und damit zu Schwierigkeiten bei der Membranherstellung.

Es wurde nun gefunden, daß semipermeable Verbundmembranen, die eine selektive Membranschicht auf der Basis von Harnstoffstrukturen enthaltenden Polymeren aufweisen, durch Verwendung von Oligo- oder Polyaminen und mit Bisulfit verkappten Isocyanaten unter Verzicht auf zwei flüssige Phasen, d.h. unter Verzicht auf eine flüssig-flüssig-Phasengrenzfläche hergestellt werden können.

Gegenstand der Erfindung ist ein Verfahren zur Herstellung semipermeabler Verbundmembranen aus wenigstens einem porösen Träger und wenigstens einer auf dem porösen Träger ausgebildeten semipermeablen Schicht, das dadurch gekennzeichnet ist, daß an der Oberfläche des porösen Trägers ein wenigstens bifunktionelles Amin mit primären oder sekundären Aminogruppen und ein wenigstens bifunktionelles, bisulfitverkapptes Isocyanat zur Reaktion gebracht wird, wobei das Amin und das verkappte Isocyanat getrennt in gelöster Form auf den porösen Träger aufgebracht werden und als Lösungsmittel für das Amin und das verkappte Isocyanat Wasser oder wäßrige Mischungen verwendet werden, wobei die Lösungsmittel für das Amin bzw. das verkappte Isocyanat miteinander mischbar sein müssen.

Bisulfit-verkappte Isocyanate sind in Wasser löslich und stabil. Sie bilden bei Raumtemperatur mit Oligo- oder Polyamin in wäßrigem Medium wasserunlösliche Polyharnstoffe.

Bisulfit-verkappte, wasserlösliche Isocyanate erhält man leicht durch Umsetzung von z.B. Natriumhydrogensulfit und Isocyanaten. Die Herstellung dieser sogenannten Isocyanatbisulfit-Addukte ist in Methoden der Org. Chemie (Houben-Weyl), Band XIV/2, S. 63 beschrieben.

Im folgenden ist das Verfahren zur Herstellung der Verbundmembranen näher beschrieben.

Es wird eine dünne, selektive Trennschicht auf einem mikroporösen Trägermaterial erzeugt. Dazu kann man einen mikroporösen Träger wie folgt behandeln:

Verfahren A

1. Beschichtung mit einer wäßrigen, aminhaltigen Lösung.

2. Beschichtung der so vorbehandelten Stützmembran mit einer wäßrigen Isocyanatbisulfitaddukt-haltigen Lösung.

3. Das so beschichtete Trägermaterial wird zur Vernetzung der auf der Stützmembran befindlichen Komponenten an der Luft belassen oder einer Wärmebehandlung unterworfen. (Im allgemeinen 1 bis 30 Minuten, bei 50 bis 150°C.

4. Es kann eine weitere Schicht auf die selektive Trennschicht aufgebracht werden, z.B. zum Schutz vor Beschädigung.

## Verfahren B

1. Beschichtung der Stützmembran mit einer wäßrigen Isocyanatbisulfitaddukt-haltigen Lösung.

2. Beschichtung der so vorbehandelten Stützmembran mit einer wäßrigen, aminhaltigen Lösung.

Die Schritte 3 und 4 sind gleich wie bei dem Verfahren A.

Die Art des Verfahrens, A oder B, kann abhängig sein von den Reaktionskomponenten Amin bzw. Isocyanataddukt. Das geeignetere Verfahren kann durch Vortests ermittelt werden.

Gegenenenfalls können die Beschichtungsvorgänge 1 und 2 in der entsprechenden Reihenfolge mehrere Male wiederholt werden, so daß eine permselektive Trennschicht bestehend aus mehreren nacheinander erzeugten Schichten entsteht.

Der erste Beschichtungsvorgang kann nach bekannten Verfahren erfolgen wie Streichen, Bürsten, Aufgießen, Sprühen, bevorzugt aber durch Eintauchen des Trägers. Der zweite Beschichtungsvorgang und alle darauffolgenden Beschichtungsvorgänge erfolgen durch Aufgießen, Sprühen bevorzugt aber auch durch Eintauchen. Zwischen den Beschichtungsvorgängen 1 und 2 sollte die überschüssige Reagenzlösung aus Beschichtungsvorgang 1 entfernt werden, z.B. durch abtropfen lassen, abtupfen, abrollen etc.

Die mikroporösen Träger sind an sich bekannt. Für das erfindungsgemäße Membranherstellverfahren kann irgendein geeignetes Trägermaterial verwendet werden. Bevorzugte mikroporöse Träger sind solche aus Polysulfonen, sulfoniertem Polysulfon, Polyvinylchlorid, Polyphenyloxid, Polyamiden, Polyimiden, Polyamidimiden, (Co)-Polymeren aus aromatischen Heterocyclen, cyclischen Polyharnstoffen wie z.B. Polyparabansäuren und Polyhydantoinen, die gemäß den DOS 1 494 443, 1 570 552, 1 720 744, 2 003 398 und 1 770 146 erhalten werden. Als besonders brauchbare Trägermaterialien für die erfindungsgemäßen Membranen haben sich Polysulfone und Polyhydantoine erwiesen. Der verwendete Träger kann an seiner Rückseite durch ein Vlies, Papier oder gewebten Stoff verstärkt sein. Solche Verstärkungsmaterialien können aus Polyethylen, Polypropylen, Polyester oder Polyamid gefertigt sein. Die Herstellung von mikroporösen Trägern ist z.B. in Office of Saline Water Research and Development Progress Report Nr. 359, Oktober 1968 beschrieben. Beliebige, auf dem Markt befindliche Ultrafiltrationsmembranen sind jedoch ebenfalls geeignet.

Als Isocyanate zur Herstellung der erfindungsgemäßen Bisulfitaddukte sind alle Diisocyanate und höherfunktionellen Isocyanate geeignet, die sich mit Bisulfit verkappen lassen und in dieser Form in Wasser oder wäßrigen Lösungsmittelmischungen löslich sind. Beispielsweise:

- Aliphatische Isocyanate wie Hexamethylendiisocyanat und daraus hergestellte höhermolekulare Polyisocyanate wie Desmodur N® der BAYER AG.

- Cycloaliphatische Isocyanate wie Isophorondiisocyanat (Desmodur Z®, BAYER AG) oder Bis-84-isocyanato-cyclohexyl)methan (Desmodur M®, BAYER AG).

- Aromatische Isocyanate wie Toluylendiisocyanat oder Xylylendiisocyanat.

- Isocyanat-terminierte heterocyclische Verbindungen wie Tris-(6-isocyanatohexyl)-isocyanursäure

- Isocyanat-terminierte Polyether bzw. Polythioether

- Isocyanat-terminierte Polyester und Polyurethane.

Es ist auch möglich, Gemische von Isocyanatbisulfit-Addukten bei dem erfindungsgemäßen Verfahren einzusetzen.

Die isocyanathaltige Beschichtungslösung wird bevorzugt bei Raumtemperatur hergestellt, wobei das Lösungsmittel Wasser oder Gemische von Wasser mit anderen Lösungsmitteln

ist. Gegebenenfalls können der Beschichtungslösung weitere für die Membranherstellung günstige Additive, wie z.B. Tenside, zugesetzt werden.

Prinzipiell sind als Aminkomponente Oligo- oder Polyamine geeignet, die in Wasser oder wäßrigen Lösungsmittelmischungen löslich sind und einen Gehalt von mindestens 2,0 meq/g, bevorzugt von mindesetns 5,0 meq/g, primärer oder sekundärer Aminogruppen, bezogen auf das Trockengewicht, enthalten.

Beispiele geeigneter Aminkomponenten sind:

- Polyamine vom Polyvinylamintyp, bzw. deren Substitutionsprodukte gem. EP-A 174 045
- Polyallylamine
- Homo- und Copolymere vom Aminostyroltyp bzw. vom Aminoalkylstyroltyp
- Aminmodifizierte Polyepihalohydrine, z.B. gemäß US-PS 4 005 012
- Aminmodifizierte Polychlorethylvinylether, z.B. gemäß EP-A 10 425
- Hyrazinmodifizierte (z.B. EP-A 8345) bzw. aminmodifizierte Poly(meth)acrylate

- Aminmodifizierte Polyepoxyverbindungen, z.B. gemäß DE-OS 2 822 784 oder EP-A 10 425

- Polyethylenimine, Oligoethylenimine

- Aminfunktionalisierte Polyether

- Amidamine aus Oligoaminen und Dicarbonsäuren, z.B. gemäß EP 14 054 oder EP-15 149

- Polymere mit substituierten Piperidinringen gemäß GB-PS 2 027 614

- Aromatische Oligo- oder Polyamine.

Es ist möglich, in einigen Fällen sogar bevorzugt, eine Mischung von 2 oder mehreren verschiedenen Aminkomponenten zur erfindungsgemäßen Herstellung von Membranen zu verwenden. Der aminhaltigen Beschichtungslösung können gegebenenfalls weitere, für die Membranherstellung günstige Additive, wie z.B. Tenside, zugesetzt werden.

Die Konzentration der Isocyanatbisulfit-Addukte bzw. der Amine in den Beschichtungslösungen kann entsprechend den Eigenschaften der gewünschten Membran variieren. Im allgemeinen liegen die Konzentrationen der Aminkomponenten zwischen 0,05 und 10 Gew.-%, vorzugsweise zwischen 0,1 und 5 Gew.-%, insbesondere ist der Bereich von 0,3 bis 3 Gew.-% bevorzugt. Die Isocyanatbisulfit-Addukte liegen in der entsprechenden Beschichtungslösung in Konzentrationen von 0,05 bis 15 Gew.-%, bevorzugt 0,1 bis 10 Gew.-%, insbesondere 0,5 bis 7,5 Gew.-%.

Die Kontaktzeit für das Aufbringen der ersten Reaktionskomponente auf das poröse Trägermaterial ist völlig unkritisch, sie kann von 1 Sekunde bis zu einigen Stunden liegen. Bevorzugt sind Zeiten von 10 sec. bis zu einer Stunde, insbesondere von 30 sec bis 30 Min. Die Kontaktzeit mit der zweiten Reaktionskomponente kann von 15 sec. bis 60 Min liegen, bevorzugt sind Zeiten von 30 sec bis 30 Min., insbesondere von 1 Min. bis 15 Min.

Die nach dem erfindungsgemäßen Verfahren hergestellten Membranen eignen sich zur Abtrennung und Konzentrierung von Substanzen durch Umkehrosmose und Druckfiltration. die Membranen können beispielsweise zur Entsalzung von Meer- oder Brackwasser zur Aufbereitung von Trinkwasser, zur Behandlung von industriellen Prozeßwässern und Produktionabläufen und zur Abtrennung organischer Materialien eingesetzt werden.

Zur Bestimmung der Membraneigenschaften, die in den folgenden Beispielen angegeben sind, wurde die fertige Membran auf eine poröse Sinterplatte aus Metall aufgebracht und in gerührten Hochdruckzellen (Typ GH 100-400, Fa. Berghof) mit den angegebenen Testlösungen unter den angegebenen Drücken beaufschlagt. Der Test erfolgte bei Raumtemperatur. Die getesteten Membranscheiben hatten einen Durchmesser von 7,5 cm.

Lösungsmittel der Testlösungen war in allen Fällen Wasser. Konzentrationsbestimmungen in Eluaten erfolgte bei Salzlösungen durch Leitfähigkeitsmessung, bei Lösungen organischer Komponenten durch den Brechungsindex, je nach vorhergehender Eichung.

Die Filtrationsleistung der Membran wird in Liter/$m^2$ Tag angegeben. Die prozentuale Zurückhaltung wird üblicherweise wie folgt angegeben:

$$\text{Rückhalt} = \left(1 - \frac{\text{Konz. des Filtrats an gelöstem Stoff}}{\text{Konz. der Ausgangslösung an gelöstem Stoff}}\right) \cdot 100\ (\%)$$

## Beispiele

### A. Herstellung der mikroporösen Träger

a) Polysulfonträger

Es wurde eine Gießlösung mit 15 Gew.-% eines Polysulfons (Udel P 3500® Union Carbide) in Dimethylformamid hergestellt. Die Lösung wurde in einer Schichtdicke von 0,25 mm bei Raumtemperatur auf ein Polyestervlies (Flächengewicht: 180 $g/m^2$) aufgetragen. Anschließend wurde die Polysulfonschicht in Wasser von Raumtemperatur, das 0,5 Gew.-% Natriumdodecylsulfat enthält, koaguliert.

b) Polyhydantointräger

Es wurde eine Gießlösung mit 20 % Polyhydantoin der Formel

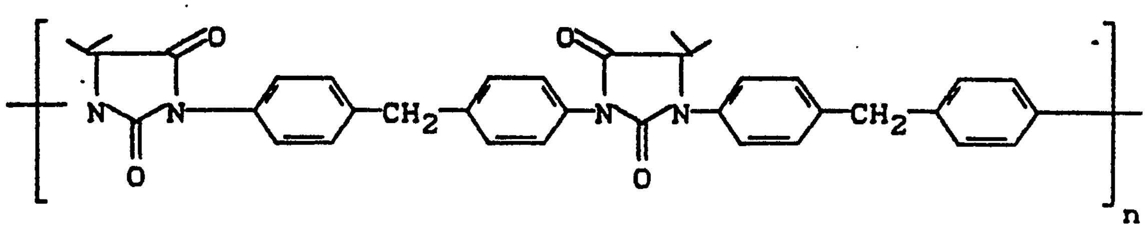

und einem mittleren Molekulargewicht von 80 000 in N-Methyl-pyrrolidon hergestellt. Die Lösung wurde in einer Schichtdicke von 0,15 mm bei Raumtemperatur auf ein Poly-

esterviies (Flächengewicht: 100 $g/m^2$) aufgetragen. Anschließend wurde die Polyhydantoinschicht in Wasser bei Raumtemperatur koaguliert.

In beiden Fällen wurden mikroporöse Membranen erhalten, die für die Verbundmembranen in den folgenden Beispielen verwendet wurden.

B. Herstellung der Isocyanatbisulfitaddukte

Zu einer 30 %igen Natriumhydrogensulfit-Lösung wird ca. 1 % Mersolat K 30® (BAYER AG, Alkylsulfonat) als Dispergiermittel und dann eine äquimolare Menge Isocyanat zugegeben. Gegebenenfalls kann als weiteres Lösungsmittel bis zu 30 % der Reaktionsmischung tert. Butanol zugegeben werden. Man verrührt die Komponenten bei Raumtemperatur, wobei sich evtl. die Reaktionsmischung leicht erwärmt und ein Niederschlag auftritt, der durch weitere Zugabe von Lösungsmittel wieder aufgelöst wird. Nach ca. 20 Stunden ist die Umsetzung abgeschlossen, man filtriert die Reaktionsmischung und fällt das verkappte Isocyanat:

a) durch Zugabe von Kaliumchlorid
b) durch Zugabe von Alkoholen wie z.B. Methanol, Ethanol, Isopropanol
c) durch Einengen der Reaktionsmischung am Rotationsverdampfer.

0243876

Die verkappten Isocyanate werden abgesaugt und auf der Fritte gewaschen. Der Reinheitsgrad bzw. der Umsetzungsgrad wurde durch Feststellung des Schwefelanteils bestimmt. Es wurden folgende Isocyanate umgesetzt:

| Isocyanat | Aufarbeitung | Schwefelanalyse | |
|---|---|---|---|
| | | Theorie | Praxis |
| Hexamethylendiisocyanat | Variante a | 15,7 | 15,5 |
| Toluylendiisocyanat (Desmodur T 100 BAYER AG) | Variante c | 11,7 | 12,0 |
| Isophorondiisocyanat (Desmodur Z, BAYER AG) | Variante b | 14,9 | 14,2 |
| m-Xylylendiisocyanat | Variante c | 16,2 | 15,5 |
| Bis-(4-isocyanatocyclohexyl)-methan (Desmodur M BAYER AG) | Variante b | 13,2 | 12,8 |
| Tris-(6-isocyanatohexyl)-isocyanursäure: | Variante b | 14,6 | 15,0 |

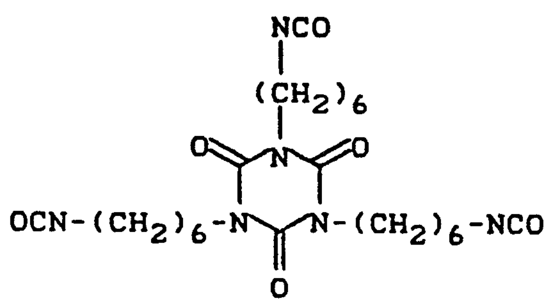

Diese Bisulfit-verkappten Isocyanate wurden in den nachfolgenden Beispielen verwendet.

## C. Herstellung und Untersuchung der Membranen

### Beispiel 1

Beispiele für die Zurückhaltung von Chlorid

Die Membranen wurden durch senkrechtes Eintauchen der mikroporösen Stützmembranen in die Lösungen der die Trennschicht bildenden Reaktanden hergestellt. Zwischen der ersten und der zweiten Tauchung beläßt man in senkrechter Lage an der Luft, um überschüssige Lösung abtropfen zu lassen, gegebenenfalls tupft man mit einem weichen Papier ab. Nach der zweiten Tauchung wird in senkrechter Lage an der Luft belassen oder bei höherer Temperatur in einem Umlufttrockenschrank behandelt. Nach dem Vernetzungsvorgang wurden die Membranen bis zum Test in Wasser aufbewahrt. Die Details sind der folgenden Tabelle I zu entnehmen.

### Beispiel 2

Beispiele für die Zurückhaltung von Nitrat
Die Membranherstellung erfolgte analog Beispiel 1.

| Membranherstellung | Test: 1 % $KNO_3$; Durchfluß 1/m d | 50 bar Rückhalt % |
|---|---|---|
| 2a wie Membran 1a | 125 | 71 |
| 2b wie Membran 1b | 200 | 82 |

Beispiel 3

Beispiele für die Zurückhaltung von Sulfat
Die Membranherstellung erfolgte analog Beispiel 1.
Einzelheiten siehe Tabelle II.

Beispiel 4

Beispiele für die Zurückhaltung wasserlöslicher organische Verbindungen.
Die Membranherstellung erfolgte analog Beispiel 1.

**T a b e l l e  I**

| Material der Stützmembran | 1. Tauchung | 2. Tauchung | Vernetzungsbedingungen | Test: 1 % NaCl; Durchfluß $1/m^2 d$ | 50 bar Rückhalt |
|---|---|---|---|---|---|
| 1a Polyhydantoin | 10 Min.<br>3,2 % Hexamethylendiisocyanat-Bisulfit-Addukt<br>Wasser | 5 Min.<br>2 % Polymin P®*) | 15' | 150 | 98 % |
| 1b Polyhydantoin | 10 Min.<br>3,2 % Hexamethylenisocyanat-Bisulfit-Addukt<br>Wasser | 5 Min.<br>1 % Polymin P<br>0,74 % 4,4'-Diaminodiphenylether<br>Wasser/Methanol 50:50 | 1 h<br>Raumtemp. | 220 | 99 % |
| | | | | Test: 3,5 % NaCl; | 50 bar |
| 1c Polyhydantoin | 10 Min.<br>3,2 % Hexamethylendiisocyanat-Bisulfit-Addukt<br>Wasser | 5 Min.<br>1 % Polyamin P<br>0,75 % 4,4'-Diaminodiphenylether<br>Wasser/Methanol 50:50 | 1 h<br>Raumtemp. | 200 | 84 % |

*) Polymin P® der Fa. BASF ist ein Polyethylenimin (das Produkt ist ca. 50 % in Wasser gelöst)

0243876

**Tabelle I** (Fortsetzung)

| Material der Stützmembran | 1. Tauchung | 2. Tauchung | Vernetzungsbedingungen | Test: 3,5 % NaCl; 50 bar Durchfluß $l/m^2$ d | Rückhalt |
|---|---|---|---|---|---|
| 1d Polyhydantoin | 10 Min.<br>3,2 % Hexamethylendiisocyanat-Bisulfit-Addukt<br>Wasser | 5 Min.<br>1 % Polymin P<br>0,75 % 4,4'-Diaminodiphenylether<br>Wasser/Methanol 50:50 | 1 h<br>Raumtemp. | 500 | 70 % |
| 1e Polysulfon | 10 Min.<br>3,2 % Hexamethylendiisocyanat-Bisulfit-Addukt<br>Wasser | 5 Min.<br>1 % Polymin P<br>0,75 % 4,4'-Diaminodiphenylether<br>Wasser/Methanol 50:50 | 15'<br>80°C | 150 | 70 % |
| 1f Polysulfon | 10 Min.<br>3,4 % m-Xylylendiisocyanat-Bisulfit-Addukt<br>Wasser | 5 Min.<br>2 % Polymin P<br>Wasser/Methanol 50:50 | 15'<br>80°C | 550 | 81 % |

**Tabelle II**

| Material der Stützmembran | 1. Tauchung | 2. Tauchung | Vernetzungsbedingungen | Test 1 % $Na_2SO_4$; Durchfluß $l/m^2$ d | 50 bar Rückhalt |
|---|---|---|---|---|---|
| 3a Polysulfon | 10 Min. 4,7 % Desmodur M - Bisulfitaddukt Wasser | 5 Min. 2 % Polymin P Wasser/Methanol 50:50 | 1 h Raumtemperatur | 400 | > 99 % |
| 3b Polysulfon | 10 Min. 3,3% Desmodur T 100-Bisulfitaddukt | 5 Min. 2 % Polymin P Wasser/Methanol 50:50 | 1 h Raumtemperatur | 600 | > 99 % |
| 3c Polyhydantoin | 10 Min. 2 % Polymin P Wasser/Methanol 50:50 | 5 min. 3,4 % Tris-(6-isocyanatohexyl)-isocyanursäure-bisulfitaddukt-Wasser | 1 h Raumtemperatur | 300 | > 99 % |
| 3d Polysulfon | 10 Min. 2 % Polymin P Wasser | 5 Min. 3,4 % Tris-(6-isocyanatohexyl)-isocyanursäure-bisufitaddukt, Wasser | 1 h Raumtemperatur | 300 | > 99 % |
| 3e Polysulfon | 10 Min. 3,7 % Desmodur Z-Bisulfitaddukt, Wasser | 5 Min. 2 % Polymin P Wasser/Methanol 50:50 | 1 h Raumtemperatur | 500 | > 99 % |

| Membranherstellung | Test: 1 % Milchzucker; 50 bar<br>Durchfluß<br>1/m d | <br>Rückhalt |
|---|---|---|
| 4a Stützmembran: Polysulfon | 220 | 97 % |
| 1. Tauchung: 10 Min.<br>4,7 % Desmodur M-Bisulfitaddukt, Wasser | | |
| 2. Tauchung: 5 Min<br>2 % Polymin P, Wasser<br>Vernetzung: 15' 80°C | | |
| 4b wie 3cc | 300 | › 99 % |
| 4 c wie 3d | 500 | › 99 % |
| 4d Stützmembran: Polyhydantoin | 300 | 98 % |
| 1. Tauchung: 10 Min.<br>3,4 % m-Xylylendiisocyanatbisulfitaddukt, Wasser | | |
| 2. Tauchung: 5 Min.<br>2 % Polymin P,<br>Wasser/Methanol 50:50 | | |

## Beispiel 5

Anwendung des erfindungsgemäßen Verfahrens zur Herstellung von Composite-Membranen unter Verwendung käuflicher Ultrafiltrationsmembranen.

Als Stützmembran wurde die Membran Bayperm HIE 779-24 APE 1 der BAYER AG verwendet. Die Membran hat eine nominale Molmassentrenngrenze von ca. 25 000 g/mol. Vor der Beschichtung wurde die Membran 24 h in Wasser gelagert, danach wie die Membran 3c beschichtet. Folgende Ergebnisse wurden erhalten:

| | Test; 50 bar | | | | | |
|---|---|---|---|---|---|---|
| Composite-Membran aus | 3,5 % NaCl | | 1 % $Na_2SO_4$ | | 1 % Milchzucker | |
| | Df* | Rh** | Df | Rh | Df | Rh |
| Bayperm HIE 779-24 APE 1 | 250 | 70 % | 400 | > 99 % | 40 | > 99 % |

* Df: Durchfluß
** Rh: Rückhalt

## Beispiel 6

In diesem Beispiel ist der Effekt einer wiederholten Tauchung gezeigt.

6a: Die Polyhydantoinstützmembran wird wie folgt behandelt:

1. Tauchung: 10 Min. Hexamethylendiisocyanat-bisulfit-addukt 3,2 % in Wasser

2. Tauchung: 5 Min. Polymin P 2 % in Wasser.

Ein Teil der so behandelten Stützmembran wird einmal 15 Min. bei 80° C behandelt: Membran I. Der andere Teil wird 15 Min. an der Luft gelagert, danach werden die Tauchungen wiederholt und ebenfalls 15 Min. bei 80° C behandelt: Membran II. Der Test mit 3,5 % NaCl ergab folgendes Ergebnis:

| | 3,5 % NaCl, Durchfluß l/m d | 50 bar Rückhalt % |
|---|---|---|
| 6a Membran I | 150 | 80 |
| 6a Membran II | 80 | > 99 |

6b: Analog wird die Polysulfonstützmembran behandelt:

1. Tauchung: 10 Min. Hexamethylendiisocyanat 3,2 % in Wasser

2. Tauchung: 5 Min. Polymin P 2 % in Wasser.

Ein Teil wird 15 Min. bei 80° C behandelt: Membran I. Der andere Teil wird 15 Min. an der Luft gelagert, danach werden die Tauchungen wiederholt und ebenfalls 15 Min. bei 80° C behandelt: Membran II.

Der Test mit 1 % $KNO_3$ ergab folgendes Ergebnis:

| | 1 % $KNO_3$, Durchfluß l/m d | 50 bar |
|---|---|---|
| Rückhalt | | |
| 6b Membran I | 200 | 75 |
| 6b Membran II | 160 | 91 |

0243876

## Patentansprüche

1. Verfahren zur Herstellung semipermeabler Verbundmembranen aus wenigstens einem porösen Träger und wenigstens einer auf dem porösen Träger ausgebildeten semipermeablen Schicht, dadurch gekennzeichnet, daß an der Oberfläche des porösen Trägers ein wenigstens bifunktionelles Amin mit primären oder sekundären Aminogruppen und ein wenigstens bifunktionelles, bisulfitverkapptes Isocyanat zur Reaktion gebracht wird, wobei das Amin und das verkappte Isocyanat getrennt in gelöster Form auf den porösen Träger aufgebracht werden und als Lösungsmittel für das Amin und das verkappte Isocyanat Wasser oder wäßrige Mischungen verwendet werden, wobei die Lösungsmittel für das Amin bzw. das verkappte Isocyanat miteinander mischbar sein müssen.

2. Semipermeable Verbundmembranen, erhalten gemäß Anspruch 1.

3. Verwendung der gemäß Anspruch 1 hergestellten semipermeablen Verbundmembranen zur Druckfiltration, Umkehrosmose und Meerwasserentsalzung.